# EUROPÄISCHE PATENTSCHRIFT

(11) **EP 4 111 119 B1**
(45) Veröffentlichungstag und Bekanntmachung des Hinweises auf die Patenterteilung: **27.12.2023**
(21) Anmeldenummer: 21712042.7
(22) Anmeldetag: 18.02.2021
(51) Int. Cl.: F27B 1/24, F27D 17/00, F27D 19/00, F27D 99/00

(54) **VORRICHTUNG UND VERFAHREN ZUM BRENNEN UND/ODER KALZINIEREN VON STÜCKIGEM GUT**
APPARATUS AND METHOD FOR BURNING AND/OR CALCINING LUMPY MATERIAL
APPAREIL ET PROCÉDÉ POUR BRÛLER ET/OU CALCINER UN MATÉRIAU EN MORCEAUX

(30) Priorität: 25.02.2020 DE 102020202410; 25.02.2020 BE 202005122
(43) Veröffentlichungstag der Anmeldung: 04.01.2023
(73) Patentinhaber: Maerz Ofenbau AG, 8002 Zürich (CH); thyssenkrupp AG, 45143 Essen (DE)
(72) Erfinder: PIRINGER, Hannes, 5712 Beinwil am See (CH)
(74) Vertreter: thyssenkrupp Intellectual Property GmbH
(86) Internationale Anmeldenummer: PCT/EP2021/053986
(87) Internationale Veröffentlichungsnummer: WO 2021/170479

(56) Entgegenhaltungen:
- EP-A1- 2 230 223
- EP-B1- 2 230 223
- DE-A1- 3 119 198
- DE-B3-102010 060 866
- DE-C1- 3 915 986

## Beschreibung

Die Erfindung betrifft eine Vorrichtung und Verfahren zum Brennen und/oder Kalzinieren von stückigem Gut, insbesondere von Kalkstein oder anderen Karbonaten, mit einem Ofen, der wenigstens eine Brennzone und eine Kühlzone aufweist.

Aus der CH 378 217 A ist ein Schachtofen zum kontinuierlichen Brennen von mineralischen Werkstoffen mit einer Brennzone und einer Kühlzone bekannt, wobei die Heißgase der Brennzone und die Brenngutkühlluft über einen im Übergangsbereich zwischen Brenn- und Kühlzone ausgebildeten Absaugraum abgeführt werden.

In der DE 27 22 719 Al wird ein GGR-Ofen mit zwei gleichartigen jeweils eine Brennzone und eine Kühlzone aufweisenden Schächten beschrieben, wobei jeder Schacht im Bereich zwischen Brennzone und Kühlzone einen Ringkanal aufweist, die über einen Überströmkanal miteinander verbunden sind.

Aus der EP 2 230 223 Al ist ein Verfahren und eine Vorrichtung zur Kalkherstellung bekannt, bei dem als Abgas möglichst reines, sequestrierfähiges Kohlendioxid entstehen soll. Hier wird das Material zunächst einem Ofenraum zugeführt und dort mit Brennstoff und einem Gas mit einem Sauerstoffgehalt von über 90 Vol.-% gebrannt. Das kalzinierte Produkt wird anschließend in einer Kühlzone mit einem Kühlgas gekühlt. Zwischen dem Ofen und der Kühlzone ist eine Schleusenanordnung vorgesehen, um die Atmosphären der beiden Behandlungsräume zu trennen. Auf diese Weise kann sichergestellt werden, dass kein Kühlgas, welches üblicherweise durch Luft gebildet wird, in den Ofen gelangt. Im Ofen kann der Brennstoff somit im Wesentlichen mit reinem Sauerstoff verbrannt werden, sodass ein sehr kohlendioxidreiches Abgas entsteht, welches durch Rezirkulation weiter aufkonzentriert werden kann.

Die zwischen Ofen und Kühlzone vorgesehene Schleusenanordnung muss einerseits einen gasdichten Abschluss der beiden Prozessräume gewährleisten und soll andererseits dem sehr heißen, gebrannten Gut standhalten. Die für diese Aufgabe geeigneten Schleusenanordnungen sind jedoch relativ aufwendig und teuer und benötigen eine große Bauhöhe.

Aus der DE 10 2010 060 866 B3 ist ein Kalkofen bekannt, der eine Brennzone aufweist, die mit ihrem unteren Ende in die Kühlzone des Schachtes hineinragt. Mit dieser Bauweise ist lediglich eine maximale Durchsatzleistung von 250t/d möglich. In der Kalkindustrie werden derzeit allerdings Kalkschachtöfen mit einer Durchsatzleistung von etwa 400 bis 600t/d gefordert.

DE 31 19 198 A1 beschreibt ein Schachtofen zum Brennen von karbonathaltigem Material mit einem Schacht aufweisend in Strömungsrichtung des Materials einen Materialeinlass, mindestens eine Brennzone mit zumindest einer Brennstoffleitung, eine Kühlzone mit einem Kühllufteinlass zum Kühlen des gebrannten Materials, und einen Materialauslass. Der Schachtofen weist eine Abgasabzugsleitung und eine Kühlgasabzugseinrichtung auf, wobei die Kühlgasabzugseinrichtung sich von der Kühlzone in die Brennzone und von der Brennzone aus dem Schacht heraus erstreckt, und das Kühlgas aus dem Schacht und zurück über einen Injektor in die Brennzone führt.

Es ist daher die Aufgabe der vorliegenden Erfindung, eine platzsparende Vorrichtung und ein Verfahren zum Brennen und/oder Kalzinieren von stückigem Gut mit einem Brennschacht und einem Kühlschacht anzugeben, sodass die Atmosphären im Brennschacht und im Kühlschacht gezielt auf einfache und kostengünstige Art eingestellt werden können. Gleichzeitig soll ein hoher Materialdurchsatz von mindestens 400t/d in dem Kalkofen möglich sein.

Diese Aufgabe wird erfindungsgemäß durch eine Vorrichtung mit den Merkmalen des unabhängigen Vorrichtungsanspruchs 1 und durch ein Verfahren mit den Merkmalen des unabhängigen Verfahrensanspruchs 8 gelöst. Vorteilhafte Weiterbildungen ergeben sich aus den abhängigen Ansprüchen.

Ein Schachtofen zum Brennen von insbesondere karbonathaltigem Material umfasst nach einem ersten Aspekt einen Schacht aufweisend in Strömungsrichtung des Materials einen Materialeinlass, mindestens eine Brennzone zum Brennen des Materials mit zumindest einer Brennstoffleitung zum Einlassen von Brennstoff in die Brennzone, eine Kühlzone mit einem Kühllufteinlass zum Kühlen des gebrannten Materials, und einen Materialauslass zum Auslassen des Materials aus dem Schachtofen. Der Schachtofen weist eine Abgasabzugsleitung zum Auslassen von Abgas aus dem Schacht auf. Des Weiteren umfasst der Schachtofen eine Kühlgasabzugseinrichtung zum Auslassen von Kühlluft aus dem Schacht, die sich von der Kühlzone in die Brennzone und von der Brennzone aus dem Schacht heraus erstreckt.

Bei dem zu brennenden Material handelt es sich beispielsweise um körniges Material, insbesondere Kalkstein, mit einer für Korngröße von10 bis 150mm, vorzugsweise 30 bis 100mm, insbesondere 40 bis 80 mm.

Der Materialeinass ist insbesondere an dem oberen Ende des Schachtes angeordnet. In Strömungsrichtung des Materials vor der Brennzone ist vorzugsweise eine Vorwärmzone zum Vorwärmen des Materials angeordnet. Die Vorwärmzone schließt sich vorzugsweise direkt an einen Materialeinlass des Materials in den Schachtofen an und dient der Vorwärmung des Materials auf eine Temperatur von etwa 600°C bis 800°C. Die Brennzone schließt sich vorzugsweise direkt an die Vorwärmzone an und dient dem Brennen des Materials, wobei dieses vorzugsweise auf eine Temperatur von etwa 950°C bis 1800°C erhitzt wird. Die Kühlzone schließt sich vorzugsweise direkt an die Brennzone an und dient der Kühlung des gebrannten Materials auf eine Temperatur von beispielsweise 100 °C. Der Materialauslass ist beispielsweise in einem sich die Kühlzone anschließenden Auslasstrichter angeordnet, wobei der Materialauslass beispielsweise einen Drehteller oder einen Schubtisch aufweist zum Austragen von Material aus der Kühlzone in den Auslasstrichter.

Die Brennstoffleitung umfasst vorzugsweise eine Mehrzahl von Brennerlanzen, die sich durch die Schachtwand in die Brennzone erstrecken und insbesondere rohrförmig ausgebildet sind und dem Leiten von Brennstoff in die Brennzone dienen.

Die Abgasabzugsleitung ist vorzugsweise ein dem oberen Bereich des Schachts, insbesondere in der Vorwärmzone oder in dem oberen Bereich der Brennzone angeordnet.

Der Schachtofen weist vorzugsweise eine Oxidationsmittelleitung zum Leiten von Oxidationsmittel in die Brennzone auf. Bei dem Oxidationsmittel handelt es sich beispielsweise um reinen Sauerstoff, Luft, mit Sauerstoff angereicherte Luft oder ein Gas mit einem Sauerstoffanteil von mindestens 90%. Die Oxidationsmittelleitung weist beispielsweise eine Oxidationsmittellanze auf, die sich in die Brennzone des Schachtofens erstreckt und einen Auslass zum Auslassen von Oxidationsmittel in die Brennzone aufweist. Vorzugsweise ist die Oxidationsmittellanze an der Brennerlanze oder direkt unterhalb der Brennerlanze angebracht. Es ist ebenfalls denkbar, dass die Oxidationsmittellanze durch die Brennerlanze verläuft. Vorzugsweise ist die Brennerlanze so ausgeführt, dass Oxidationsmittel zusammen mit Verbrennungsluft und Brennstoff durch die Brennerlanze strömt.

Der Einlass der Kühlgasabzugseinrichtung zum Einlassen von Kühlluft in die Kühlgasabzugseinrichtung ist vorzugsweise vollständig innerhalb der Kühlzone angeordnet. Insbesondere ist der Einlass unterhalb der Brennstoffleitungen, insbesondere der Mündungen der Brennerlanzen in die Brennzone, angeordnet. Die Kühlgasabzugseinrichtung ist vorzugsweise zumindest teilweise unterhalb der Abgasabzugsleitung angeordnet. Der Auslass der Kühlgasabzugseinrichtung zum Auslassen des Gases in eine außerhalb des Schachtes angeordnet Kühlgasabzugsleitung ist vorzugsweise innerhalb der Brennzone oder der Vorwärmzone angeordnet.

Durch die spezielle Ausbildung und Anordnung der Kühlluftabzugseinrichtung, wird eine einfache Beeinflussung des Kühlgasabzugs ermöglicht. Die Atmosphäre in der Brennzone wird von der Atmosphäre in der Kühlzone im Wesentlichen nur durch das im untersten Teil der Brennzone befindliche Material getrennt. Das mit Überdruck in die Brennzone eingeführte Kühlgas nimmt grundsätzlich den Weg des geringsten Widerstandes. Durch das beispielsweise in der Kühlgasabzugsleitung angeordnete und als eine Klappe oder Ventil geregelte Regelorgan lässt sich die Menge an abzuziehendem Gas sehr einfach steuern, sodass beispielsweise das gesamte Kühlgas über die Kühlgasabzugseinrichtung abgezogen wird und nicht über die Materialschüttung in die Brennzone gelangt. Selbstverständlich ist es durch eine geeignete Stellung des Regelorgans auch möglich, dass lediglich eine Teilmenge des Kühlgases über die Kühlgasabzugseinrichtung abgezogen und der Rest der Kühlzone zugeführt wird. Schließlich ist es grundsätzlich auch denkbar, dass das Regelorgan so weit geöffnet wird, dass ein Teil des Abgases aus der Brennzone durch die Materialschüttung in die Kühlzone und von dort über die Kühlgasabzugseinrichtung abgezogen wird.

Gemäß einer ersten Ausführungsform erstreckt sich die Kühlgasabzugseinrichtung mittig durch die Brennzone. Dies ermöglicht ein gleichmäßiges Brennen des in der Brennzone vorhandenen Materials, ohne dass die Kühlgasabzugseinrichtung den Brennvorgang negativ beeinflusst. Vorzugsweis erstreckt sich die Kühlgasabzugseinrichtung über die gesamte Länge der Brennzone. Bei der Kühlgasabzugseinrichtung handelt es sich beispielsweise um ein Rohr oder einen Schacht mit einem insbesondere kreisförmigen oder eckigen Querschnitt.

Die Brennzone ist gemäß einer weiteren Ausführungsform zumindest teilweise kreisringförmig ausgebildet und konzentrisch mit der Kühlgasabzugseinrichtung angeordnet. Die Breite des Kreisrings beträgt beispielsweise etwa 0,5m bis 2m, vorzugsweise 1m. Beispielsweise ist die Brennzone vollständig oder teilweise als Hohlzylinder ausgebildet, wobei das Innere des Hohlzylinders durch die Kühlgasabzugseinrichtung gebildet wird. Vorzugsweise ist die Kühlgasabzugseinrichtung abgeschlossen, sodass die Kühlgasabzugseinrichtung im Betrieb des Schachtofens einen materialfreien Raum ausbildet.

Die Kühlgasabzugseinrichtung ist mit einem Regelorgan zur Regelung der Menge an Gas, das durch die Kühlgasabzugseinrichtung strömt, verbunden. Bei dem Regelorgan handelt es sich beispielsweise um ein Ventil oder eine Klappe. Dies ermöglicht eine gezielte Abfuhr einer bestimmten Menge an Kühlabluft durch die Kühlgasabzugseinrichtung, wobei beispielsweise die Kühlluft vollständig oder teilweise aus der Kühlzone abgezogen werden kann. Bei einem Teilabzug der Kühlluft aus der Kühlzone durch die Kühlgasabzugseinrichtung strömt der übrige Teil der Kühlluft in die Brennzone und wird über den die Abgasabzugsleitung aus dem Schacht abgeführt.

Das Regelorgan ist gemäß einer weiteren Ausführungsform mit einem Sensor verbunden, der zur Ermittlung der Druckdifferenz zwischen der Brennzone und der Kühlluftabzugseinrichtung ausgebildet und eingerichtet ist. Der Schachtofen weist vorzugsweise einen weiteren Sensor zur Ermittlung des Sauerstoffgehalts und/ oder des CO2 Gehalts in der Abgasabzugsleitung und/ oder der Kühlgasabzugsleitung auf.

Das Regelorgan ist gemäß einer weiteren Ausführungsform über eine Steuereinrichtung mit dem Sensor zur Ermittlung der Druckdifferenz und/oder dem Sauerstoffgehalt und/ oder dem CO2 Gehalt verbunden. Die Steuereinrichtung ist derart ausgebildet, dass sie das Regelorgan in Abhängigkeit der ermittelten oder gewünschten Druckdifferenz, des Sauerstoffgehalts und/ oder des CO2 Gehalts steuert. Vorzugsweise ist das Regelorgan von einer geöffneten Stellung, in der die Kühlgasabzugsleitung durch das Regelorgan kaum oder gar nicht verengt wird, in eine geschlossene Stellung, in der kein Gas durch die Kühlgasabzugsleitung strömbar ist, bewegbar. Die Steuereinrichtung steuert die Bewegung des Regelorgans vorzugsweise stufenlos zwischen der geschlossenen und der geöffneten Stellung. Die Sensoren sind vorzugsweise mit der Steuereinrichtung derart verbunden, dass die ermittelte Druckdifferenz, Sauerstoffgehalt und CO2 Gehalt an die Steuerungseinrichtung übertragen werden.

Die Kühlgasabzugseinrichtung ist gemäß einer weiteren Ausführungsform mit einer Kühlluftabzugsleitung zum Leiten der aus dem Schacht abgeführten Kühlabluft verbunden und wobei die Kühlluftabzugsleitung in Strömungsrichtung der Kühlabluft einen Wärmetauscher, einen Filter zum Entstauben der Kühlabluft und/oder das Regelorgan aufweist. Der Wärmetauscher wird vorzugsweise mit der Abluft aus der Abgasabzugsleitung betrieben. Des Weiteren wird beispielsweise ein Kühlgas, wie Luft, in die Kühlluftabzugsleitung geleitet. Es ist ebenfalls denkbar, die Kühlabluft nicht durch einen Wärmetauscher zu leiten, sondern beispielsweise zur Erzeugung von Strom, Trocknung von Mahlgut oder zu Heizzwecken zu verwenden.

Die Brennstoffleitung ist gemäß einer weiteren Ausführungsform mit einer Mehrzahl von Brennerlanzen verbunden, die sich in die Brennzone erstrecken und wobei die Brennerlanzen auf zumindest zwei unterschiedlichen Höhenniveaus innerhalb der Brennzone angeordnet sind. Die Brennerlanzen sind vorzugsweise an der Innenwand der Brennzone angebracht und gleichmäßig zueinander beabstandet angeordnet. Insbesondere sind die Brennerlanzen an dem unteren Endbereich der Brennzone angeordnet.

Die Erfindung umfasst auch ein Verfahren zum Brennen von insbesondere karbonathaltigem Material in einem Schachtofen mit einem Schacht, wobei das Material durch einen Materialeinlass in mindestens eine Brennzone zum Brennen des Materials und eine Kühlzone zum Kühlen des gebrannten Materials zu einem Materialauslass strömt. Die Kühlluft wird in die Kühlzone eingelassen und das Abgas über eine Abgasabzugsleitung aus dem Schacht ausgelassen. Die Kühlluft wird über eine Kühlluftabzugseinrichtung aus dem Schacht ausgelassen, die sich von der Kühlzone in die Brennzone und von der Brennzone aus dem Schacht heraus erstreckt.

Die vorangehend mit Bezug auf den Schachtofen beschriebenen Vorteile und Ausführungen treffen in verfahrensgemäßer Entsprechung auch auf das Verfahren zum Brennen von Material in einem Schachtofen zu.

Die Menge an Gas, das durch die Kühlgasabzugseinrichtung abgezogen wird, wird durch ein mit der Kühlgasabzugseinrichtung verbundenes Regelorgan eingestellt.

Die Druckdifferenz zwischen der Kühlluftabzugseinrichtung und der Brennzone wird gemäß einer weiteren Ausführungsform ermittelt und die Menge an Gas, das durch die Kühlgasabzugseinrichtung abgezogen wird in Abhängigkeit der ermittelten oder einer gewünschten Druckdifferenz geregelt.

Gemäß einer weiteren Ausführungsform wird der Sauerstoffgehalt und/ oder der CO2-Gehalt des durch die Kühlgasabzugseinrichtung abgezogenen Gases und/ oder des durch die Abgasabzugsleitung abgezogenen Abgases ermittelt und die Menge an Gas, das durch die Kühlgasabzugseinrichtung abgezogen wird, in Abhängigkeit des ermittelten oder gewünschten Sauerstoffgehalts und/ oder der CO2-Gehalts geregelt.

Beispielsweise wird zur Erzeugung von mittelhartem und hart gebrannten Kalk mit verminderter Reaktivität die Stellung des Regelorgans derart eingestellt, dass kein Abgas aus der Brennzone in die Kühlluftabzugseinrichtung, insbesondere in die Kühlzone, gelangt. Das gesamte innerhalb der Brennzone entstehende Abgas wird vorzugsweise aus der Abgasabzugsleitung aus dem Schacht ausgelassen. Vorzugsweise wird das Regelorgan derart eingestellt, dass weder Abgas aus der Brennzone in die Kühlzone noch Kühlluft aus der Kühlzone in die Brennzone gelangt.

Zur Erzeugung von weich gebranntem Kalk mit hoher Reaktivität, wird vorzugsweise die Stellung des Regelorgans derart eingestellt, dass ein Teil des Abgases der Brennzone in die Kühlzone strömt und vorzugsweise über die Kühlluftabzugseinrichtung aus dem Schacht ausgelassen wird. Vorzugsweise gelangt in dieser Stellung des Regelorgans keine Kühlluft aus der Kühlzone in die Brennzone.

Vorzugsweise wird eine bestimmte Druckdifferenz, ein Sauerstoffgehalt und/ oder ein CO2 Gehalt in der Steuerungseinrichtung eingestellt, wobei die Steuerungseinrichtung derart ausgebildet ist, dass sie das Regelorgan steuert, sodass die gewünschte Druckdifferenz, der Sauerstoffgehalt und/ oder der CO2 Gehalt erreicht wird. Ist der Druck innerhalb der Kühlluftabzugseinrichtung zu hoch, wird das Regelorgan geschlossen, um eine Druckreduzierung zu erreichen.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung einer Vorrichtung zum Brennen und/oder Kalzinieren von stückigem Gut, insbesondere von Kalkstein gemäß einem Ausführungsbeispiel.
- Fig. 2: zeigt eine schematische Darstellung einer Vorrichtung zum Brennen und/oder Kalzinieren von stückigem Gut, insbesondere von Kalkstein gemäß einem weiteren Ausführungsbeispiel.

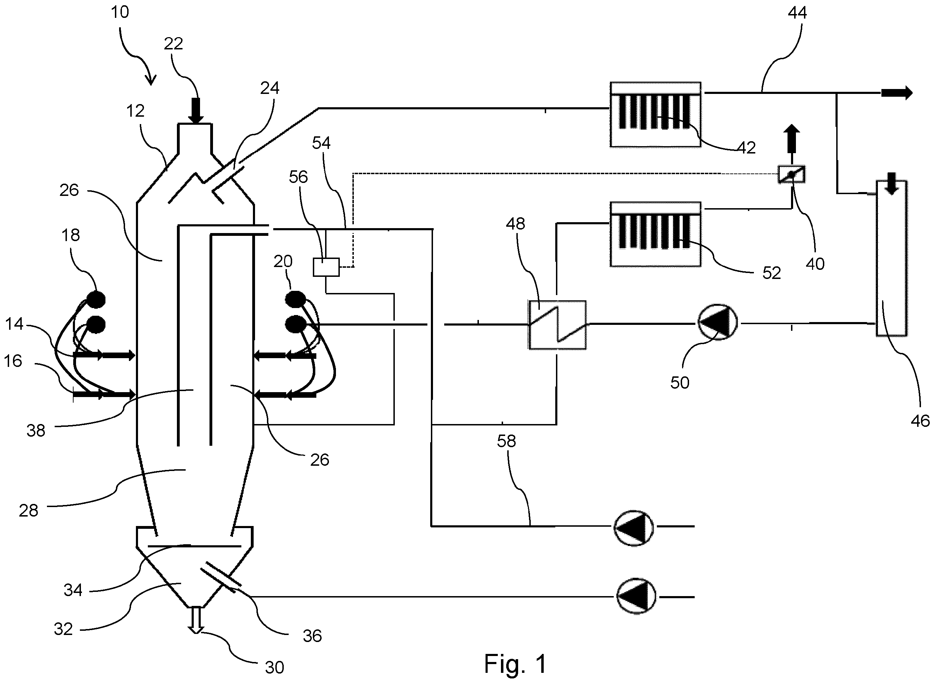

In Fig. 1 ist ein Schachtofen 10 zum Brennen von körnigem Material gezeigt, wobei der Schachtofen 10 einen Schacht 12 umfasst, der sich vorzugsweise in vertikaler Richtung erstreckt und beispielsweise einen im Wesentlichen konstanten Querschnitt aufweist. Beispielsweise weist der Schacht 12 einen runden, insbesondere kreisförmigen, oder eckigen, insbesondere viereckigen Querschnitt auf. Der Schacht 12 ist von einer Schachtwand umgeben, die beispielsweise aus Stahl mit einer sich daran anschließenden gemauerten, feuerfesten Innenwand ausgebildet ist. Der Schacht 12 weist an seinem oberen Ende einen Materialeinlass 22 auf, der beispielsweise als obere Öffnung des Schachts 12 ausgebildet ist und sich vorzugsweise über den gesamten oder einen Teil des Querschnitts des Schachts 12 erstreckt. Der Materialeinlass 22 dient dem Einlassen von zu brennenden Material in den Schachtofen 10.

Der Schacht 12 weist in einem oberen Bereich neben der Materialaufgabe 22 zur Zuführung von stückigem Gut, insbesondere von Kalkstein, eine Abgasabzugsleitung 24 zum Abführen von Ofenabgas auf. Das zu brennende Material wird schwerkraftbedingt von oben nach unten durch den Schacht 12 gefördert, wobei der Schacht 12 in Förderrichtung des Materials einer Brennzone 26 zum Brennen des Materials und einer Kühlzone 28 zum Kühlen des gebrannten Materials aufweist. Vorzugsweise weist der Schacht 12 in Förderrichtung vor der Brennzone 26 eine Vorwärmzone auf, die sich von dem Materialeinlass 22 zu der Brennzone 26 erstreckt und der Vorwärmung des Materials vor dem Brennen dient. In einem unteren Bereich der Brennzone 26 sind Brennstoffleitungen 14, 16 zum Einführen von Brennsoff und Oxidationsmittelzuleitungen 18, 20 zum Einführen eines Oxidationsmittels in die Brennzone 26 des Schachts 12 angeordnet. Die Brennstoffleitungen sind schematisch durch Pfeile dargestellt, wobei diese jeweils beispielsweise eine Mehrzahl von Brennstoffleitungen darstellen. Die Oxidationsmittelzuleitungen 18, 20 sind beispielsweise jeweils mit beiden oder nur einer Brennstoffleitung 14, 16 verbunden, sodass das Oxidationsmittel zusammen mit dem Brennstoff in die Brennzone 26 strömt. Die Oxidationsmittelzuleitungen 18, 20 stehen beispielsweise jeweils mit einem Ventilator, vorzugsweise einem Verdichter, in Verbindung, sodass das Oxidationsmittel durch die Oxidationsmittelzuleitungen 18, 20 in Richtung der Brennstoffleitungen 14, 16 beaufschlagt wird. Jede Oxidationsmittelzuleitungen 18, 20 ist beispielsweise als Ringleitung ausgebildet, die sich jeweils um den Umfang der Schachtwand erstreckt. Die Ringleitungen sind beispielhaft oberhalb der Brennstoffleitungen 14, 16 angeordnet und jeweils mit einer Mehrzahl von Brennerlanzen der Brennstoffleitungen 14, 16 verbunden. Zumindest eine der Oxidationsmittelzuleitungen 18, 20 dient der Leitung von Luft, mit Sauerstoff angereicherter Luft oder reinem Sauerstoff, wobei eine andere der Oxidationsmittelzuleitungen 18, 20 der Leitung von Schachtabgasen in die Brennzone 26 dient. Zumindest eine der Oxidationsmittelzuleitungen 18, 20 ist mit der Abgasabzugsleitung 24 verbunden, sodass Schachtabgas in die Brennzone 26 geleitet wird.

Bei dem Oxidationsmittel handelt es sich beispielsweise um Luft, reinen Sauerstoff, Abluft des Schachtofens oder ein Gas mit einem Sauerstoffanteil von etwa 90%. Die Brennstoffleitungen 14, 16 umfassen beispielsweise eine Mehrzahl von Brennerlanzen, die sich durch die Schachtwand in die Brennzone 26 erstrecken.

Beispielsweise sind die Brennerlanzen der Brennstoffleitungen 14, 16 in zwei Ebenen angeordnet, wobei optional die Brennerlanzen der oberen Ebene eine erste Einstecktiefe in die Brennzone 26 aufweisen und die Brennerlanzen der unteren Ebene eine zweite Einstecktiefe in die Brennzone 26 aufweisen. Über die Brennstoffleitungen 14, 16 wird vorzugsweise gasförmiger, pulverförmiger oder flüssiger Brennstoff zusammen mit dem Oxidationsmittel aus der Oxidationsmittelzuleitung 18, 20 in die Brennzone 26 aufgegeben.

Am unteren Ende des Schachts 12 ist ein Materialauslass 30 zum Abführen des gebrannten Materials angeordnet. An die Kühlzone 28 schließt sich In Materialförderrichtung ein Auslasstrichter 32 an, der in dem Materialauslass 30 zum Auslassen des Materials aus dem Schachtofen 10 mündet. In dem Auslasstrichter 32 ist beispielhaft eine Austragsvorrichtung 34 angeordnet, die dem Auslassen von Material aus der Kühlzone 28 des Schachtofens 10 in den Auslasstrichter 32 dient. Bei der Austragsvorrichtung 34 handelt es sich beispielsweise um einen Drehteller oder einen Schubtisch. Unterhalb des Materialauslasses 30 befindet sich beispielsweise entweder eine dicht schließende Materialaustragsklappe oder nach Bedarf eine dicht schließende Materialschleuse. Das Material strömt im Wesentlichen schwerkraftbedingt durch den Schachtofen 10 und wird im Gegenstrom oder teilweise im Gleichstrom thermisch behandelt. Die Höhe des Schachts 12 ist vorzugsweise durch die verfahrensgemäß im Zusammenhang mit der Einstellung der Fördergeschwindigkeit mittels der Austragsvorrichtung 34 zu bestimmenden Verweilzeiten des Brennmaterials bestimmt. Diese Verweilzeiten verteilen sich auf die obere, sich an den Materialeinlass 22 anschließende Vorwärmzone, auf die nach unten folgende Brennzone 26 und die bis zur Austragsvorrichtung 34 verlaufende Kühlzone 28. Vorzugsweise wird in der Vorwärmzone das Material bis auf eine Temperatur von bis zu ca. 800°C vorgewärmt, wobei die Brennzone 26 beispielsweise eine Temperatur von 800°C bis 1800°C aufweist und in der Kühlzone 28 das Material wieder bis auf ca. 100°C abgekühlt wird.

Der Schachtofen 10 weist einen oder mehrere Lufteinlässe 36 zum Einbringen von Luft in den Schachtofen 10 auf. Beispielhaft ist in dem Schachtofen 10 der Fig. 1 ein Lufteinlass 36 angeordnet, der Luft in den Auslasstrichter 32 einleitet. Vorzugsweise wird die Luft mit einem Druck von bis zu 500 mbar in den Auslasstrichter 32 eingeblasen. Die Luft wird im Folgenden als Sekundärluft oder Kühlluft bezeichnet. Die Sekundärluft durchströmt den Schachtofen 10, insbesondere den Schacht 12, von unten nach oben in vertikaler Richtung und im Gegenstrom zu dem Material und verlässt den Schacht 12 durch die Abgasabzugsleitung 24 und/ oder durch die Kühlluftabzugseinrichtung 38 und die Kühlluftabzugsleitung 54.

Der Schacht 12 weist des Weiteren eine Kühlluftabzugseinrichtung 38 zum Abführen zumindest eines Teils der Kühlluft aus dem Schacht 12 auf. Die Kühlluftabzugseinrichtung 38 erstreckt sich beispielhaft mittig durch die Brennzone 26 des Schachts 12 hindurch. Vorzugsweise ist die Brennzone 26 des Schachts 12 zumindest teilweise oder vollständig als Ringraum ausgebildet, der konzentrisch zu der Kühlluftabzugseinrichtung 38 angeordnet ist. Optional erstreckt sich die Kühlluftabzugseinrichtung 38 von der Kühlzone 28 oder der Grenze zwischen der Brennzone 26 und der Kühlzone 28 durch die Brennzone 26 hindurch beispielsweise bis in die Vorwärmzone und durch die Schachtwand aus dem Schacht 12 hinaus. Die Kühlluftabzugseinrichtung 38 ist mit einer Kühlluftabzugsleitung 54 zur Leitung der mittels der Kühlluftabzugseinrichtung 38 aus dem Schacht 12 abgezogenen Kühlluft verbunden.

Die Kühlluftabzugseinrichtung 38 weist vorzugsweise einen kreisförmigen Querschnitt auf und ist nach oben geschlossen, sodass kein zu brennenden Material in die Kühlluftabzugseinrichtung 38 eintritt. Die Brennzone 26 weist insbesondere einen kreisringförmigen Querschnitt auf, wobei die Breite des Kreisrings etwa 0,5 bis 2m, vorzugsweise etwa 1 m beträgt.

Im Betrieb bildet sich in der Brennzone 26 des Schachts 12 eine Materialsäule mit dem über die Materialaufgabe 22 zugeführten Gut aus, wobei das Gut durch Schwerkraft nach unten wandert und im Bereich der Kühlzone 28 über den Materialauslass 30 als kalziniertes Produkt, beispielweise Branntkalk, abgezogen wird. Das Gut füllt dabei die Brennzone 26 über den gesamten vorzugsweise kreisringförmigen Querschnitt und die Kühlzone 28 aus. Die Kühlluftabzugseinrichtung 38 ist vorzugsweise materialfrei.

Das Kühlgas durchströmt die Materialschüttung und gelangt in die Kühlluftabzugseinrichtung 38. Die Kühlluftabzugseinrichtung 38 ist über die Kühlluftabzugsleitung 54 mit einem Regelorgan 40 in Form von beispielsweise einer Klappe verbunden zur Regelung der Menge an Luft, die durch die Kühlluftabzugsleitung 54 strömt.

Die Abgasabzugsleitung 24 zum Abführen des Abgases aus der Brennzone 26 ist vorzugsweise mit einem Filter 42 zur Entstaubung des Abgases und optional mit einer Kühleinrichtung 46 zur Kühlung des heißen Abgases verbunden. Über die Abgasabzugsleitung 24 wird zumindest teilweise oder vollständig das Abgas der Brennzone 26 aus dem Schacht 12 abgeführt. Das über die Abgasabzugsleitung 24 aus dem Schacht 12 abgezogene Abgas wird in dem Filter 42 entstaubt und dann zur weiteren Verarbeitung als entstaubtes Abgas 44 abgeführt. Optional kann hinter dem Filter 42 eine Kühlung, insbesondere eine Wasserkühlung, in einer Kühleinrichtung 46 erfolgen. Das vor oder nach der Kühleinrichtung 46 abgeführte Abgas 44 weist einen hohen CO2-Anteil auf und kann beispielsweise einer Sequestrierung und/ oder einer weiteren industriellen Verwertung, wie beispielsweise der Herstellung von Soda oder gefälltem Calciumcarbonat, zugeführt werden.

Beispielsweise wird ein Teil des aus der Abgasabzugsleitung 24 abgeführten Abgases in die Brennzone 26 eingeführt, beispielsweise um die Verbrennungstemperatur einzustellen, und als Oxidationsmittel verwendet. Die Abgasabzugsleitung 24 ist daher optional mit einer der Oxidationsmittelzuleitungen 18, 20 verbunden, sodass Abgas in die Oxidationsmittelzuleitung strömt. Beispielhaft wird ein Teil des mittels der Kühleinrichtung 46 abgekühlten Abgases zusammen oder separat mit dem Oxidationsmittel der Brennzone 26 zugeführt. Zwischen der Kühleinrichtung 46 und der Oxidationsmittelzuleitung 18, 20 ist beispielsweise ein Wärmetauscher 48 angeordnet. Der rezirkulierte Teil des Abgases wird beispielsweise in dem beispielsweise durch die abgezogen Kühlluft betriebenen Wärmetauscher 48 auf beispielsweise 500° vorgewärmt. Damit die Wärmeübertragung im Wärmetauscher 48 nicht durch Ablagerungen vermindert wird, kann es zweckmäßig sein, dass das abgezogene Kühlgas, welches beispielsweise eine Temperatur von 900°C hat, zuvor auf unter 700°C, vorzugsweise unter 600°C, abzukühlen, wobei die Abkühlung beispielsweise durch Vermischung mit Luft oder in der Kühleinrichtung 46 erfolgen kann. Vorzugsweise ist ein Ventilator 50 oder Verdichter zum Beschleunigen des rezirkulierten Abgases in Richtung der Oxidationsmittelzuleitung 18, 20 vorgesehen.

Die Kühlluftabzugsleitung 54 ist insbesondere mit dem Wärmetauscher 48 und im Anschluss daran optional mit einem Filter 52 verbunden, sodass die über die Kühlluftabzugseinrichtung 38 abgezogene Kühlluft gekühlt und entstaubt wird. Zur weiteren Kühlung der abgezogenen Kühlluft wird optional ein Kühlmittel, wie Luft über die Mischluftzuführungsleitung 58 mit der abgezogenen Kühlluft vermischt, vorzugsweise vor dem Eintritt in den Wärmetauscher 48. Der Filter 52 ist vorzugsweise in Strömungsrichtung der abgezogenen Kühlluft vor dem Regelorgan 40 angeordnet. In der Kühlgasabzugsleitung 54 sind somit nacheinander der Wärmetauscher 48, der Filter 52 und das Regelorgan 40 angeordnet. Es ist ebenfalls denkbar, die Kühlabluft nicht durch einen Wärmetauscher zu leiten, sondern beispielsweise zur Erzeugung von Strom, Trocknung von Mahlgut oder zu Heizzwecken zu verwenden.

Das Regelorgan 40 steht ferner mit einer in Fig. 1 nicht dargestellten Steuereinrichtung in Verbindung, die mit einem oder mehreren Sensoren 56 verbunden ist. Der Schachtofen 10 weist zumindest einen Sensor 56 auf, der zur Messung der Druckdifferenz zwischen der Brennzone 26 und der Kühlluftabzugseinrichtung 38 ausgebildet und eingerichtet ist. Des Weiteren können Sensoren zur Messung des Sauerstoffgehaltes und/oder des CO2-Gehaltes in der Kühlluftabzugsleitung 54 und/ oder Abgasabzugsleitung 24 angeordnet sein.

Die Messwerte geben Aufschluss darüber, welche Menge des über die Kühllufteinlässe 36 der Kühlzone 28 zugeführten Kühlgases über die Kühlgasabzugseinrichtung 38 abgeführt wird. Die Menge lässt sich dabei über das Regelorgan 40 einstellen. Das Kühlgas wird immer den Weg des geringsten Widerstandes wählen. So lässt sich beispielsweise bei einer bestimmten Stellung des Regelorgans 40 erreichen, dass der Kühlgasabzug so eingestellt ist, dass das Kühlgas weder in die Brennzone 26 noch das Abgas der Brennzone 26 in die Kühlzone 28 strömt. In dieser Situation würde sich am Sensor 56 eine Druckdifferenz von Null bzw. nahe Null einstellen. Eine entsprechende Überprüfung lässt sich aber beispielsweise auch durch den Sauerstoffgehalt und/ oder CO2-Gehalt des abgeleiteten Kühlgases oder des Abgases durchführen. Würde man das Regelorgan 40 im Sinne einer weiteren Öffnung verstellen, würde allmählich ein Teil des Abgases aus der Brennzone 26 in die Kühlzone 28 und von dort über die Kühlgasabzugseinrichtung 38 abgeleitet werden. Entsprechend wird bei einem weiteren Verschließen des Regelorgans 40 ein Teil der Kühlluft in die Brennzone 26 überströmen, sodass nur ein Teilabzug des Kühlgases über die Kühlgasabzugseinrichtung 38 erfolgt.

Das durch eine Absperrklappe gebildete Regelorgan 40 ermöglicht somit eine sehr einfache, effiziente und kostengünstige Beeinflussung des Kühlgasabzuges. Dennoch können gewünschtenfalls die beiden Atmosphären in der Brennzone 26 und in der Kühlzone 28 voneinander getrennt werden, ohne dass eine aufwendige Schleusenanordnung erforderlich ist.

Die Stellung des Regelorgans 40 hängt in erster Linie von der gewünschten Anwendung, insbesondere von der gewünschten Zusammensetzung des Abgases oder der Beschaffenheit des gebrannten Materials ab. Beispielsweise wird zur Erzeugung von mittelhartem und hart gebrannten Kalk mit verminderter Reaktivität, die Stellung des Regelorgans derart eingestellt, dass kein Abgas aus der Brennzone 26 in die Kühlluftabzugseinrichtung 38, insbesondere in die Kühlzone 28, gelangt. Das gesamte innerhalb der Brennzone entstehende Abgas wird vorzugsweise aus der Abgasabzugsleitung 24 aus dem Schacht 12 ausgelassen. Vorzugsweise wird das Regelorgan 40 derart eingestellt, dass weder Abgas aus der Brennzone 26 in die Kühlzone 28 noch Kühlluft aus der Kühlzone 28 in die Brennzone 26 gelangt.

Zur Erzeugung von weich gebranntem Kalk mit hoher Reaktivität, wird die Stellung des Regelorgans derart eingestellt, dass ein Teil des Abgases der Brennzone 26 in die Kühlzone 28 strömt und vorzugsweise über die Kühlluftabzugseinrichtung 38 aus dem Schacht 12 ausgelassen wird. Vorzugsweise gelangt in dieser Stellung des Regelorgans 40 keine Kühlluft aus der Kühlzone 28 in die Brennzone 26.

Will man beispielsweise ein Abgas mit einem hohen CO2-Anteil von beispielsweise 90% Vol.-% bezogen auf ein trockenes Abgas erhalten, muss durch das Regelorgan 40 sichergestellt werden, dass kein Kühlgas in die Brennzone 26 gelangt. Außerdem wird man vorzugsweise ein Oxidationsmittel mit einem sehr hohen Sauerstoffgehalt von wenigstens 90%, vorzugsweise mehr als 90% Vol.-%, wählen. Das sich dabei ergebende Abgas eignet sich insbesondere für eine nachfolgende Sequestrierung.

Im Rahmen der Erfindung ist es auch denkbar, dass der oben beschriebene Schachtofen 10 bzw. das zugehörige Verfahren zur Herstellung eines Abgases genutzt wird, welches in der Sodaindustrie benötigt wird. Hierzu sollte das Abgas einen CO2-Gehalt von etwa 40 bis 42% und einen Sauerstoffgehalt von unter 2% aufweisen. Um ein solches Abgas zu erhalten, muss das Regelorgan so eingestellt werden, dass lediglich eine Teilmenge des Kühlgases über die Kühlgasabzugsleitung abgezogen wird, während der andere Teil in den Brennschacht gelangt.

Eine weitere Anwendungsmöglichkeit stellt die Herstellung von gefälltem Calciumcarbonat dar. Durch die spezielle Konstruktion der im Überdruck betriebenen Vorrichtung, mit einer materialfreien, gasgefüllten Kühlluftabzugseinrichtung in der Kühl- und Brennzone 26, 28 in Kombination mit dem Regelorgan ergibt sich ein Schachtofen 10 zum Brennen und/oder Kalzinieren von stückigem Gut, der sich durch eine besonders einfache und kostengünstige Möglichkeit zur Beeinflussung der Zusammensetzung des Abgases bzw. der Atmosphären in der Brennzone 26 und der Kühlzone 28 auszeichnet.

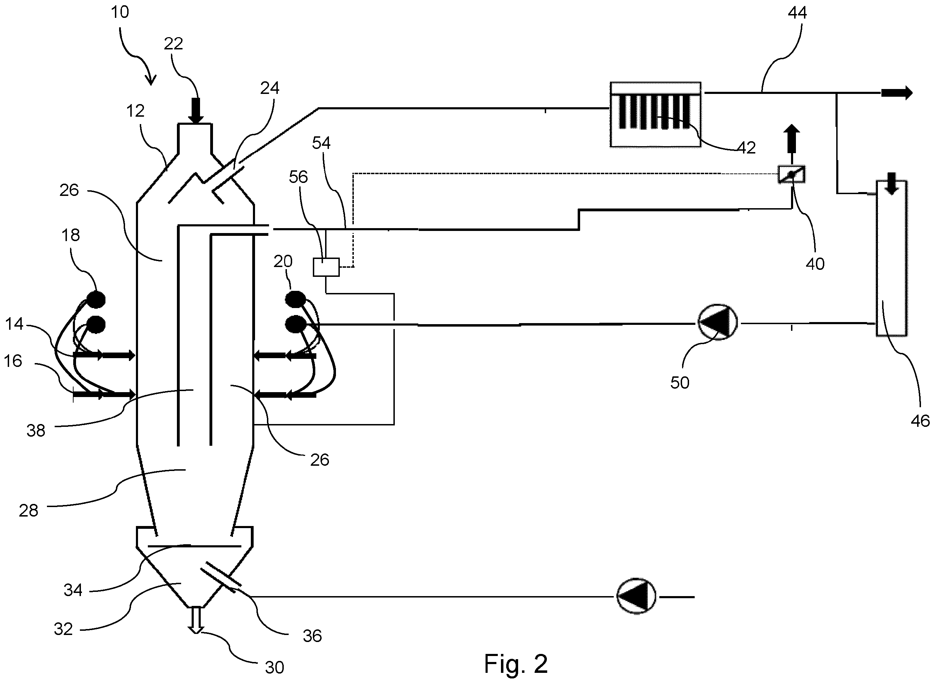

Fig. 2 zeigt eine weitere Ausführung des Schachtofens 10, wobei der Aufbau zum Großteil dem in Fig. 1 entspricht und mit gleichen Bezugszeichen versehen ist. Im Unterschied zu Fig. 1 weist Fig. 2 in der Kühlluftabzugsleitung 54 keinen Wärmetauscher, Filter und keine Verbindung mit einer Mischluftzuführungsleitung 58 auf. Die Kühlluftabzugsleitung 38 weist das Regelorgan 40 auf, sodass die über die Kühlluftabzugsleitung 38 abgezogene Kühlluft zu dem Regelorgan 40 geleitet wird.

Die Abgasabzugsleitung 24 weist im Unterschied zur Fig. 1 keinen Wärmetauscher zur Vorwärmung des zur Einführung in die Brennzone 26 rezirkulierten Abgases auf. In dem Ausführungsbeispiel der Fig. 2 wird daher vorteilhafterweise auf eine Vorwärmung des Abgases vor Eintritt in die Brennzone 26 verzichtet. Dies ist beispielsweise dann vorteilhaft, wenn eine möglichst niedrige Brenntemperatur in der Brennzone 26 gewünscht ist, um beispielsweise Kalk mit einer hohen Reaktivität herzustellen. Die erwärmte Kühlluft wird in diesem Fall über die Kühlluftabzugseinrichtung 38 in die Kühlluftabzugsleitung 54 abgezogen. Die abgezogene Kühlluft wird beispielsweise für nachgeschaltete Prozesse, wie beispielsweise Erzeugung von Strom, Trocknung von Mahlgut oder zu Heizzwecken, verwendet.

### Bezugszeichenliste

- 10: Schachtofen
- 12: Schacht
- 14: Brennstoffleitungen
- 16: Brennstoffleitungen
- 18: Oxidationsmittelzuleitung
- 20: Oxidationsmittelzuleitung
- 22: Materialeinlass
- 24: Abgasabzugsleitung
- 26: Brennzone
- 28: Kühlzone
- 30: Materialauslass
- 32: Auslasstrichter
- 34: Austragsvorrichtung
- 36: Kühllufteinlässe
- 38: Kühlluftabzugseinrichtung
- 40: Regelorgan
- 42: Filter
- 44: entstaubtes Abgas
- 46: Kühleinrichtung
- 48: Wärmetauscher
- 50: Ventilator
- 52: Filter
- 54: Kühlluftabzugsleitung
- 56: Sensor
- 58: Mischluftzuführungsleitung

## Patentansprüche

1. Schachtofen (10) zum Brennen von insbesondere karbonathaltigem Material mit einem Schacht (12) aufweisend in Strömungsrichtung des Materials
einen Materialeinlass (22),
mindestens eine Brennzone (26) zum Brennen des Materials mit zumindest einer Brennstoffleitung (14, 16) zum Einlassen von Brennstoff in die Brennzone (26),
eine Kühlzone (28) mit einem Kühllufteinlass (36) zum Kühlen des gebrannten Materials, und einen Materialauslass (30) zum Auslassen des Materials aus dem Schachtofen (10), wobei der Schachtofen (10) eine Abgasabzugsleitung (24) zum Auslassen von Abgas aus dem Schacht (12) aufweist,
**dadurch gekennzeichnet, dass**
der Schachtofen (10) eine Kühlgasabzugseinrichtung (38) zum Auslassen von Kühlluft aus dem Schacht (12) aufweist, die sich von der Kühlzone (28) in die Brennzone (26) und von der Brennzone (26) aus dem Schacht (12) heraus erstreckt,
wobei die Kühlgasabzugseinrichtung (38) mit einem Regelorgan (40) zur Regelung der Menge an Gas, das durch die Kühlgasabzugseinrichtung (38) strömt, verbunden ist.

2. Schachtofen (10) nach Anspruch 1, wobei sich die Kühlgasabzugseinrichtung (38) mittig durch die Brennzone (26) erstreckt.

3. Schachtofen (10) nach einem der vorangehenden Ansprüche, wobei die Brennzone (26) zumindest teilweise kreisringförmig ausgebildet ist und konzentrisch mit der Kühlgasabzugseinrichtung (38) angeordnet ist.

4. Schachtofen (10) nach einem der vorangehenden Ansprüche, wobei das Regelorgan (40) mit einem Sensor (56) verbunden, der zur Ermittlung der Druckdifferenz zwischen der Brennzone (26) und der Kühlluftabzugseinrichtung (38) ausgebildet und eingerichtet ist.

5. Schachtofen (10) nach Anspruch 4, wobei das Regelorgan (40) über eine Steuereinrichtung mit dem Sensor (56) verbunden ist und die Steuereinrichtung derart ausgebildet ist, dass sie das Regelorgan (40) in Abhängigkeit der ermittelten Druckdifferenz steuert.

6. Schachtofen (10) nach einem der vorangehenden Ansprüche, wobei die Kühlgasabzugseinrichtung (38) mit einer Kühlluftabzugsleitung (54) zum Leiten der aus dem Schacht (12) abgeführten Kühlabluft verbunden ist und wobei die Kühlluftabzugsleitung (54) in Strömungsrichtung der Kühlabluft einen Wärmetauscher (48), einen Filter (52) zum Entstauben der Kühlabluft und/oder das Regelorgan (40) aufweist.

7. Schachtofen (10) nach einem der vorangehenden Ansprüche, wobei die Brennstoffleitung (14, 16) mit einer Mehrzahl von Brennerlanzen verbunden ist, die sich in die Brennzone (26) erstrecken und wobei die Brennerlanzen auf zumindest zwei unterschiedlichen Höhenniveaus innerhalb der Brennzone (26) angeordnet sind.

8. Verfahren zum Brennen von insbesondere karbonathaltigem Material in einem Schachtofen (10) mit einem Schacht (12), wobei das Material durch einen Materialeinlass (22) in mindestens eine Brennzone (26) zum Brennen des Materials und eine Kühlzone (28) zum Kühlen des gebrannten Materials zu einem Materialauslass (30) strömt,
wobei Kühlluft in die Kühlzone (28) eingelassen wird und
wobei das Abgas über eine Abgasabzugsleitung (24) aus dem Schacht (12) ausgelassen wird und
**dadurch gekennzeichnet, dass**
die Kühlluft über eine Kühlluftabzugseinrichtung (38) aus dem Schacht (12) ausgelassen wird, die sich von der Kühlzone (28) in die Brennzone (26) und von der Brennzone (26) aus dem Schacht (12) heraus erstreckt,
wobei die Menge an Gas, das durch die Kühlgasabzugseinrichtung (38) abgezogen wird durch ein mit der Kühlgasabzugseinrichtung (38) verbundenes Regelorgan (40) eingestellt wird.

9. Verfahren nach Anspruch 8, wobei die Druckdifferenz zwischen der Kühlluftabzugseinrichtung (38) und der Brennzone (26) ermittelt wird und die Menge an Gas, das durch die Kühlgasabzugseinrichtung (38) abgezogen wird, in Abhängigkeit der ermittelten oder einer gewünschten Druckdifferenz geregelt wird.

10. Verfahren nach einem der Ansprüche 8 oder 9, wobei der Sauerstoffgehalt und/ oder der CO2-Gehalt des durch die Kühlgasabzugseinrichtung (38) abgezogenen Gases und/ oder des durch die Abgasabzugsleitung (24) abgezogenen Abgases ermittelt wird und die Menge an Gas, das durch die Kühlgasabzugseinrichtung (38) abgezogen wird in Abhängigkeit des ermittelten oder gewünschten Sauerstoffgehalts und/ oder der CO2-Gehalts geregelt wird.

## Claims

1. A shaft kiln (10) for burning in particular carbonate-containing material having a shaft (12) comprising in the flow direction of the material
a material inlet (22),
at least one burning zone (26) for burning the material having at least one fuel conduit (14, 16) for admitting fuel into the burning zone (26),
a cooling zone (28) having a cooling air inlet (36) for cooling the burnt material and a material outlet (30) for discharging the material from the shaft kiln (10),
wherein the shaft kiln (10) comprises an offgas withdrawal conduit (24) for discharging offgas from the shaft (12),
**characterized in that**
the shaft kiln (10) comprises a cooling gas withdrawal means (38) for discharging cooling air from the shaft (12) which extends from the cooling zone (28) into the burning zone (26) and from the burning zone (26) out of the shaft (12),
wherein the cooling gas withdrawal means (38) is connected to a control element (40) for controlling the amount of gas flowing through the cooling gas withdrawal means (38).

2. The shaft kiln (10) as claimed in claim 1, wherein the cooling gas withdrawal means (38) extends centrally through the burning zone (26).

3. The shaft kiln (10) as claimed in either of the preceding claims wherein the burning zone (26) is at least partially annular and arranged concentrically with the cooling gas withdrawal means (38).

4. The shaft kiln (10) as claimed in any of the preceding claims wherein the control element (40) is connected to a sensor (56) configured and adapted for determining the pressure difference between the burning zone (26) and the cooling air withdrawal means (38).

5. The shaft kiln (10) as claimed in claim 4, wherein the control element (40) is connected to the sensor (56) via a control means and the control means is configured such that it controls the control element (40) according to the determined pressure difference.

6. The shaft kiln (10) as claimed in any of the present claims, wherein the cooling gas withdrawal means (38) is connected to a cooling air withdrawal conduit (54) for conducting the exhaust cooling air discharged from the shaft (12) and wherein the cooling air withdrawal conduit (54) comprises in the flow direction of the exhaust cooling air a heat exchanger (48), a filter (52) for dedusting the exhaust cooling air and/or the control element (40).

7. The shaft kiln (10) as claimed in any of the present claims, wherein the fuel conduit (14, 16) is connected to a multiplicity of burner lances which extend into the burning zone (26) and wherein the burner lances are arranged at at least two different height levels within the burning zone (26).

8. A process for burning especially carbonate-containing material in a shaft kiln (10) having a shaft (12), wherein the material flows via a material inlet (22) into at least one burning zone (26) for burning the material and via a cooling zone (28) for cooling the burnt material to a material outlet (30),
wherein cooling air is admitted into the cooling zone (28) and
wherein the offgas is discharged from the shaft (12) via an offgas withdrawal conduit (24) and
**characterized in that**
the cooling air is discharged from the shaft (12) via a cooling air withdrawal means (38) which extends from the cooling zone (28) into the burning zone (26) and from the burning zone (26) out of the shaft (12),
wherein the amount of gas withdrawn by the cooling gas withdrawal means (38) is adjusted via a control element (40) connected to the cooling gas withdrawal means (38).

9. The process as claimed in claim 8, wherein the pressure difference between the cooling air withdrawal means (38) and the burning zone (26) is determined and the amount of gas withdrawn via the cooling gas withdrawal means (38) is controlled according to the determined pressure difference or a desired pressure difference.

10. The process as claimed in either of claims 8 or 9, wherein the oxygen content and/or the CO2 content of the gas withdrawn by the cooling gas withdrawal means (38) and/or of the offgas withdrawn via the offgas withdrawal conduit (24) is determined and the amount of gas withdrawn by the cooling gas withdrawal means (38) is controlled according to the determined or desired oxygen content and/or the CO2 content.

## Revendications

1. Four à cuve (10) pour la combustion de matières contenant du carbonate en particulier, ayant une cuve (12) comprenant dans le sens d'écoulement de la matière
une entrée de matière (22),
au moins une zone de combustion (26) pour brûler la matière avec au moins un conduit de combustible (14, 16) pour admettre le combustible dans la zone de combustion (26),
une zone de refroidissement (28) comportant une entrée d'air de refroidissement (36) pour refroidir le matériau brûlé
et une sortie de matériau (30) pour décharger le matériau du four à cuve (10),
dans lequel le four à cuve (10) comprend un conduit d'extraction des effluents gazeux (24) pour évacuer les effluents gazeux de la cuve (12),
**caractérisé par le fait que**
le four à cuve (10) comprend un moyen de prélèvement du gaz de refroidissement (38) pour évacuer l'air de refroidissement de la cuve (12) qui s'étend de la zone de refroidissement (28) à la zone de combustion (26) et de la zone de combustion (26) à l'extérieur de la cuve (12),
dans lequel le moyen de prélèvement du gaz de refroidissement (38) est connecté à un élément de commande (40) pour contrôler la quantité de gaz circulant à travers le moyen de prélèvement du gaz de refroidissement (38).

2. Le four à cuve (10) selon la revendication 1, dans lequel le moyen d'extraction du gaz de refroidissement (38) s'étend au centre de la zone de combustion (26).

3. Le four à cuve (10) selon l'une des revendications précédentes, dans lequel la zone de combustion (26) est au moins partiellement annulaire et disposée concentriquement avec le moyen d'extraction du gaz de refroidissement (38).

4. Le four à cuve (10) selon l'une des revendications précédentes, dans lequel l'élément de commande (40) est connecté à un capteur (56) configuré et adapté pour déterminer la différence de pression entre la zone de combustion (26) et le moyen d'extraction de l'air de refroidissement (38).

5. Four à cuve (10) selon la revendication 4, dans lequel l'élément de commande (40) est relié au capteur (56) par un moyen de commande et le moyen de commande est configuré de manière à commander l'élément de commande (40) en fonction de la différence de pression déterminée.

6. Le four à cuve (10) selon l'une quelconque des revendications précédentes, dans lequel le moyen de prélèvement du gaz de refroidissement (38) est relié à un conduit de prélèvement d'air de refroidissement (54) pour conduire l'air de refroidissement évacué de la cuve (12) et dans lequel le conduit de prélèvement d'air de refroidissement (54) comprend, dans la direction d'écoulement de l'air de refroidissement évacué, un échangeur de chaleur (48), un filtre (52) pour dépoussiérer l'air de refroidissement évacué et/ou l'élément de commande (40).

7. Le four à cuve (10) selon l'une quelconque des revendications précédentes, dans lequel le conduit de combustible (14, 16) est relié à plusieurs lances de brûleur qui s'étendent dans la zone de combustion (26) et dans lequel les lances de brûleur sont disposées à au moins deux niveaux de hauteur différents à l'intérieur de la zone de combustion (26).

8. Procédé de combustion de matières contenant du carbonate dans un four à cuve (10) doté d'une cuve (12), dans lequel les matières s'écoulent via une entrée de matières (22) dans au moins une zone de combustion (26) pour brûler les matières et via une zone de refroidissement (28) pour refroidir les matières brûlées jusqu'à une sortie de matières (30),
l'air de refroidissement est admis dans la zone de refroidissement (28) et
les effluents gazeux sont évacués de l'arbre (12) par un conduit d'évacuation des effluents gazeux (24) et
**caractérisé par le fait que**
l'air de refroidissement est évacué de l'arbre (12) par un moyen de prélèvement d'air de refroidissement (38) qui s'étend de la zone de refroidissement (28) à la zone de combustion (26) et de la zone de combustion (26) à l'extérieur de l'arbre (12),
dans lequel la quantité de gaz prélevée par le moyen de prélèvement de gaz de refroidissement (38) est réglée par un élément de commande (40) connecté au moyen de prélèvement de gaz de refroidissement (38).

9. Procédé selon la revendication 8, dans lequel la différence de pression entre le moyen de prélèvement d'air de refroidissement (38) et la zone de combustion (26) est déterminée et la quantité de gaz prélevée par le moyen de prélèvement de gaz de refroidissement (38) est réglée en fonction de la différence de pression déterminée ou d'une différence de pression souhaitée.

10. Procédé selon l'une des revendications 8 ou 9, dans lequel la teneur en oxygène et/ou la teneur en CO2 du gaz prélevé par le moyen de prélèvement du gaz de refroidissement (38) et/ou du gaz résiduel prélevé par le conduit de prélèvement du gaz résiduel (24) est déterminée et la quantité de gaz prélevé par le moyen de prélèvement du gaz de refroidissement (38) est commandée en fonction de la teneur en oxygène et/ou de la teneur en CO2 déterminées ou souhaitées.
